# EUROPEAN PATENT SPECIFICATION

(11) **EP 0 553 158 B1**
(45) Date of publication and mention of the grant of the patent: **28.12.1994**
(21) Application number: 91917879.8
(22) Date of filing: 04.10.1991
(51) Int. Cl.: G06F 15/78, G06F 9/46

(54) **A SCALABLE PARALLEL VECTOR COMPUTER SYSTEM**
SKALIERBARES PARALLEL-VEKTORRECHNERSYSTEM
SYSTEME D'ORDINATEUR VECTORIEL EN PARALLELE DE TYPE EVOLUTIF A NOMBRE DE PROCESSEURS VARIABLE

(30) Priority: 19.10.1990 US 600328
(43) Date of publication of application: 04.08.1993
(73) Proprietor: CRAY RESEARCH, INC., Eagan, Minnesota 55121 (US)
(72) Inventor: OBERLIN, Steven, M., Chippewa Falls, WI 54729 (US); STEPHENSON, Bricky, A., Chippewa Falls, WI 54729 (US)
(74) Representative: Eisenführ, Speiser & Partner
(86) International application number: US9107271
(87) International publication number: WO9207335

(56) References cited:
- EP-A- 0 325 384
- US-A- 3 676 852
- PATENT ABSTRACTS OF JAPAN vol.11, no. 243(P-603)(2690) 8 August1987 &JP,A,62052667 (HITACHI) 7 March 1987
- PROCEEDINGS OF THE 1983 INTERNATIONAL CONFERENCE ON PARALLEL PROCESSING 23 August 1983, COLUMBUS, OHIO, USA pages 524- 529;Gajski: "Cedar- a large scale multiprocessor"
- WESCON/87 CONFERENCE RECORD. vol. 31, 1987, LOS ANGELES US pages 1- 8; WAINWRIGHT: "Register banks boost 16/32 bit cpu performence"

## Description

### Field of the Invention

The present invention pertains generally to the field of high-speed digital data processing systems, and more particularly to scalable multiprocessor super computing machines adapted for vector processing.

### Background of the Invention

Many scientific data processing tasks involve extensive arithmetic manipulation of ordered arrays of data. Commonly, this type of manipulation or "vector" processing involves performing the same operation repetitively on each successive element of a set of data. Most computers are organized with one central processing unit (CPU) which can communicate with a memory and with input-output (I/O). To perform an arithmetic function, each of the operands must be successively brought to the CPU from memory, the functions must be performed, and the result returned to memory. However, the CPU can usually process instructions and data in less elapsed time than they can be fetched from the memory unit. This "inherent memory latency" results in the CPU sitting idle much of the time waiting for instructions or data to be retrieved from memory. Machines utilizing this type of organization, i.e. "scalar" machines, have therefore been found too slow and hardware inefficient for practical use in large scale processing tasks.

In order to increase processing speed and hardware efficiency when dealing with ordered arrays of data, "vector" machines have been developed. A vector machine is one which deals with ordered arrays of data by virtue of its hardware organization, thus attaining a higher speed of operation than scalar machines. One such vector machine is disclosed in U.S. Patent No. 4,128,880, issued December 5, 1978 to Cray.

The vector processing machine of the Cray patent is a single processor machine having three vector functional units specifically designed for performing vector operations. The Cray patent also provides a set of eight vector registers. Because vector operations can be performed using data directly from the vector registers, a substantial reduction in memory access requirements (and thus delay due to the inherent memory latency) is achieved where repeated computation on the same data is required.

The Cray patent also employs prefetching of instructions and data as a means of hiding inherent memory latencies. This technique, known as "pipelining", involves the prefetching of program instructions and writing them into one end of an instruction "pipe" of length n while previous instructions are being executed. The corresponding data necessary for execution of that instruction is also fetched from memory and written into one end of a separate data pipeline or "chain". Thus, by the time an instruction reaches the read end of the pipe, the data necessary for execution which had to be retrieved from memory is immediately available for processing from the read end of the data chain. By pipelining instructions and chaining the data, then, most of the execution time can be overlapped with the memory fetch time. As a result, processor idle time is greatly reduced.

Computer processing speed and efficiency in both scalar and vector machines can be further increased through the use of multiprocessing techniques. Multiprocessing involves the use of two or more processors sharing system resources, such as the main memory. Independent tasks of different jobs or related tasks of a single job may be run on the multiple processors. Each processor obeys its own set of instructions, and the processors execute their instructions simultaneously ("in parallel"). By increasing the number of processors and operating them in parallel, more work can be done in a shorter period of time.

An example of a two-processor multiprocessing vector machine is disclosed in U.S. Patent No. 4,636,942, issued January 13, 1987 to Chen et al., which patent is incorporated herein by reference. Another aspect of the two-processor machine of the Chen ′942 patent is disclosed in U.S. Patent No. 4,661,900, issued April 28, 1987 to Chen et al.. A four-processor multiprocessing vector machine is disclosed in U.S. Patent No. 4,745,545, issued May 17, 1988 to Schiffleger, and in U.S. Patent No. 4,754,398, issued June 28, 1988 to Pribnow. All of the above named patents are assigned to Cray Research, Inc., the assignee of the present invention.

Another multiprocessing vector machine from Cray Research, Inc., the assignee of the present invention, is the Y-MP vector supercomputer. A detailed description of the Y-MP architecture can be found in the co-pending and commonly assigned patent application Serial No. 07/307,882, filed February 7, 1989, entitled "MEMORY ACCESS CONFLICT RESOLUTION SYSTEM FOR THE Y-MP". In the Y-MP design, each vector processor has a single pipeline for executing instructions. Each processor accesses common memory in a completely connected topology which leads to unavoidable collisions between processors attempting to access the same areas of memory. The Y-MP uses a collision avoidance system to minimize the collisions and clear up conflicts as quickly as possible. The conflict resolution system deactivates the processors involved and shuts down the vectors while the conflict is being resolved. Therefore, a collision introduces processor idle time because the processors involved must wait for the collision to be resolved. Because of this problem, the Y-MP supercomputer is limited to the relatively small number of only eight vector processors. Expanding the Y-MP design to include more processors would increase the number of memory access conflicts between processors and thus increase processor idle time. The Y-MP architecture is therefore not adaptable for massively parallel vector processing, in which it is desirable to have hundreds or thousands of processors in a system.

Although multiprocessing can increase performance speed, the increase is not linearly related to the number of processors employed. This is largely due to two factors: overhead and "lockout". Significant overhead is introduced in a multiprocessor environment because of the increased level of control and synchronization required to coordinate the processors and processor functions. Communication between and control of all the processors introduces performance degradation into multiprocessing systems. When several processors are cooperating to perform a task, data dependencies between and the passing of data between processors are inevitable. Processor idle time is introduced when one processor must wait for data to be passed to it from another processor System performance is thus reduced.

The other significant cause of multiprocessor system degradation is processor lockout, or "blocking", associated with multiple processors sharing common resources. This occurs when one processor attempts to access a shared resource which another processor is already using. The processor is thus blocked from using the shared resource and must wait until the other processor is finished. Again, processor idle time occurs and system performance is reduced.

An additional drawback of the art described above is that they are oriented toward solving single pipelined jobs very fast, and therefore do not take advantage of the high level of parallelism inherent in many jobs.

Some scalar multiprocessing machines have been developed which attempt to obtain greater performance by introducing another aspect of parallelism into the machine. Rather than using the standard multiprocessing technique of using several processors, each with one instruction stream, these scalar machines employ several processors, each having multiple instruction streams, or "threads". Computational and memory latencies are covered by "context switching" between the threads within a processor. One example of such a machine is the Denelcor Heterogenous Element Processor (HEP).

The Denelcor HEP is a scalar multiprocessing machine which can contain up to 16 processors each having up to 128 pipelined instruction threads. Each thread has its own program memory, general purpose registers and functional units. The HEP context switch is accomplished by time-slicing the multiple threads in the processor, i.e., the processor switches threads on each clock cycle. Every clock cycle the next thread in circular order is permitted to issue an instruction. After n clock cycles, all n threads have been allowed to issue an instruction. On clock cycle (n+1), the processor will context switch back to the first thread and the process repeats itself. For example, a 16 thread context switching processor could effectively hide any latencies that were 15 or fewer clock periods in length, since a particular thread is active only one out of every 16 consecutive clock cycles.

Although the context switching scheme of the Denelcor HEP can hide relatively short memory latencies, latencies which are longer than the number of threads can result in a thread being passed over during its time-slice because of a lingering data dependency or a block due to more than one processor attempting to access shared resources. For example, in high-speed clock systems, memory may be 30 or more clock cycles "distant" from the processors in a best case situation. Such a system would require 30 or more independent program threads to cover the memory access latency. If fewer threads are used many wasted returns to a blocked thread can occur. This results in processor idle time and a corresponding reduction in performance.

Although this problem in the HEP can apparently be resolved by increasing the number of threads, that solution creates other problems. First, operating system management becomes ever more complex as the number of threads in a processor goes up. Second, a multithreading compiler may have difficulties finding sufficient unrelated threads with no shared data dependencies to make effective use of even 16 processors. Because of this, a processor will often run with less than the optimal number of threads. This in turn increases the likelihood that latencies and data dependencies will not be resolved by the time a thread is selected for processing again.

The time-slice nature of the HEP context switch further limits use of the HEP. The reliance on simple time-slice switching techniques rests on the assumption that computational and memory latencies are fixed. However, this is typically not the case in multiprocessor environments where variable latencies abound.

Moreover, because the HEP is a scalar machine having a maximum of only sixteen processors, it is not desirable for use with large scale vector processing tasks. Because scalar machines require more instructions and more data manipulation to complete vector operations, vector operations take much longer and are more inefficiently performed on a the HEP. Also, because the HEP design is limited to a relatively small number (16) of processors, the design cannot be expanded to a massively parallel processing architecture, in which it is desirable to have hundreds or thousands of processors.

Another example of a scalar multiprocessor/multithread machine is the HORIZON concept architecture under study at the Supercomputing Research Center and at Tera Computer Company. The HORIZON architecture is closely related to the architecture of its predecessor, the aforementioned Denelcor HEP, in that each processor has up to 128 pipelined instruction threads, and a context switch occurs after every machine cycle. Also, each thread in the HORIZON has its own general purpose registers, program counter and processor state.

One basic difference between the two architectures is that while the HEP can have up to only 16 processors, the HORIZON may have from 256 to 1024 processors. However, because the architecture is so closely related to the HEP architecture, most of the drawbacks encountered with the HEP are still present in HORIZON. Again, the problems involved with the requirement of a large number of threads per processor, difficulties in finding a large number of unrelated program threads, the assumption of fixed latencies, and the limitations of scalar machines make the HORIZON architecture a less desirable alternative for use with large scale vector processing tasks.

Another aspect of multiprocessing machines which effects overall machine performance is the processors to memory interface. One solution to the multiprocessor interface question can be found in the Monarch parallel multiprocessing computer, designed by BBN Systems and Technologies Corporation. The Monarch is a scalar, single threaded multiprocessing architecture, which uses a technique called "circuit switching" to communicate between processors and memory. In the circuit switching interface scheme, all processors share the same path to memory. When a processor in the Monarch design has a memory request, the entire path from the processor network to memory is opened up and is kept open until the memory and the processor are done communicating. This scheme can choke off other processors which are attempting to reference memory through the circuit switching network, limiting the reference transfer rate and resulting in a high amount of processor idle time. Such a design is therefore not practical for use in multiprocessor, multithreaded, vector processing in which an inherently large volume of data must be passed between the processors and the memory.

Another solution to the multiprocessor memory interface can be found in the HORIZON routing scheme. The HORIZON interface network uses a scheme called desperation routing, or hot potato routing. HORIZON's desperation routing is a multi-stage network which has multiple inputs and the equivalent measure of outputs. This routing scheme says that every input gets routed to an output every network cycle. For example, if there are four input references, and each of the four input references wants to go to the same output, one of the four input references gets the right choice and all the other inputs get some other, undesired choice. This means that three out of the four inputs take a much longer path through the network. The HORIZON desperation network is routed in such a fashion that these other three references will eventually come back to the desired input and have another opportunity to get to the desired output. So that references will not be forever lost in the network, the HORIZON routing scheme has a mechanism such that the longer a reference is in the network, its priority goes up so that it will eventually win out over contending references for the same output. Those skilled in the art will readily recognize that such a routing scheme results in a single reference having multiple possibilities on how to get to the desired end point, and that many references can spend a very long period of time trying to fight traffic in the network. Thus, the HORIZON desperation routing scheme is also not desirable for use in multithreaded vector processing machines.

Another example of multiprocessor thread switching is described in European Patent Application No. EP 0 325 384 (Quantel Ltd.), published July 26, 1989. A reference describing interconnections between processors and memory is shown in the patent abstracts of Japan, volume 11, No. 243 (P-603) (2690) 8 August 1987. Another reference describing crosspoint interconnects between processors and memory is discussed in the Proceedings of the 1983 International Conference on "Parallel Processing" 23-26 August 1983, Columbus, Ohio, USA, Pages 524-529.

Therefore, there is a need in the art for a computing machine which takes advantage of vector processing, which takes further advantage of the very high degree of parallelism inherent in many large scale vector processing tasks, and which is easily scalable to any number of processors without the need for extensive redesigns of the operating system or processors.

### Summary of the Invention

To overcome limitations in the art described above and to overcome other limitations that will become apparent upon reading and understanding the present specification, the present invention as claimed provides a scalable multiprocessor supercomputing machine adapted for vector processing wherein multiple unrelated program threads can execute instructions in the same processor. The computer could be configured with any number of processors; the modular nature of the architecture permits the construction of any scale of the machine by simple replication.

The architecture implements a resource sharing scheme whereby multiple unrelated program threads can execute instructions in the same processor. Only one of the multiple threads is active at any time, and remains active until an issue block due to a memory conflict is encountered. When a block occurs, the processor deactivates the current thread and context switches to the next thread in a round robin fashion. Because each thread is allowed to run until a block occurs, and because the system is designed for vector processing, only a small number of unrelated program threads are necessary to cover computational and memory latencies in the preferred embodiment. Higher throughput with far fewer threads than were possible with previous machines can thus be obtained.

A key system design assumption is that the multithreaded context switching processor covers memory access latencies by executing unrelated code from the multiple program threads. Operating each thread with code unrelated to another thread in the processor ensures that a block resulting in a context switch is local (thread specific) and will not affect execution of any other thread in the processor. A particular thread is expected to have its blocks resolved and be ready to activate again after all the other threads have had their turn in the round robin execution cycle.

The shared main memory utilized in the architecture of the present invention is divided into several memory banks. The processors communicate with the shared memory via a multilayer crossbar network. The crossbar network maintains the independence of each processor-to-memory port all the way to the memory banks. Communication and synchronization between processors is accomplished through the use of shared registers located at the shared memory and accessed through the crossbar network using special instructions.

### Description of the Drawings

In the drawings, where like numerals refer to like elements throughout the several views;

FIGURE 1 shows a block diagram of the overall architecture of the present invention.

FIGURE 2 is a more detailed block diagram of one of the layers shown in FIGURE 1.

FIGURES 3A and 3B show a block diagram of a processor of the type used in one preferred embodiment of the present invention.

FIGURES 4A, 4B and 4C show block diagrams of the input circuitry for the processor ports of the present invention.

FIGURE 5A, 5B and 5C show block diagrams of the output circuitry for the processor ports of the present invention.

FIGURE 6 is a more detailed block diagram of a 4x4 crossbar switch shown in FIGURE 1 taken along the dashed lines.

FIGURES 7A and 7B show a block diagram of a memory board of the type used in the present invention.

### Detailed Description of the Preferred Embodiment

In the following detailed description of the Preferred Embodiment, reference is made to the accompanying drawings which form a part hereof, and in which is shown by way of illustration a specific embodiment in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

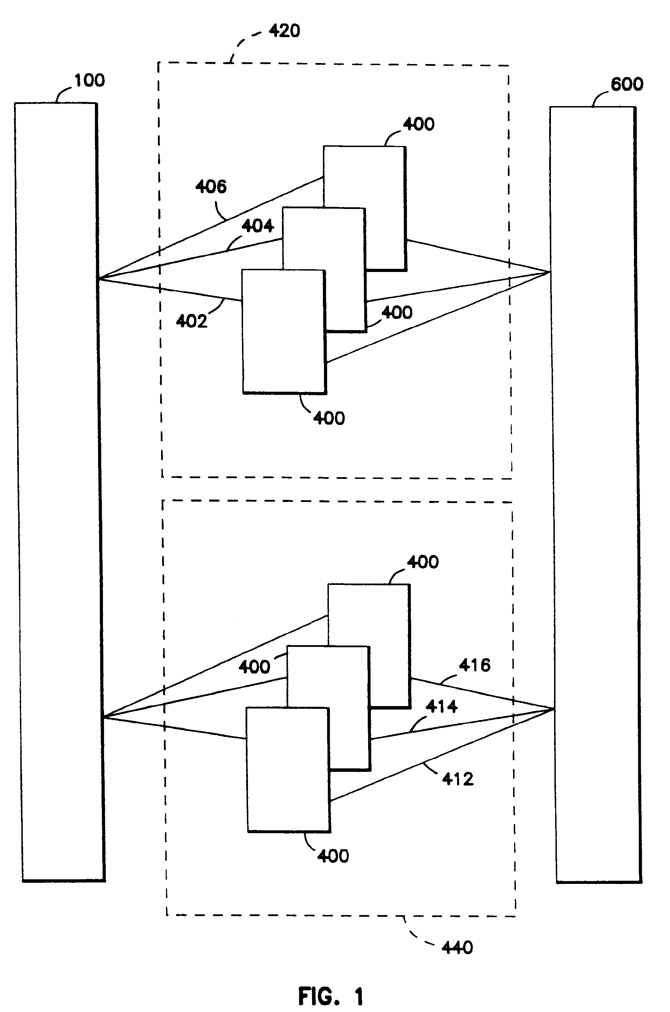

Referring now to FIGURE 1, a simplified block diagram of the overall architecture of the present invention is shown. FIGURE 1 shows a multiple processor network 100 interfaced to common memory 600 via several crossbar networks 400. In the preferred embodiment of the present invention, each individual processor (not shown) in processor network 100 has three ports to common memory, port A, port B and port C. To minimize memory contention and blocking as seen from the processor side, the three port paths are kept separate all the way to common memory 600. This is accomplished by dedicating to each port its own separate inbound crossbar networks, shown by phantom lines 440, and outbound crossbar networks, shown by phantom lines 420. ("Outbound" crossbar networks handle processor-to-memory references, while the "inbound" crossbar networks handle memory-to-processor references.) For example, then, all port A processor-to-memory references from the individual processors in processor network 100 are dedicated to outbound path 402. All port B processor-to-memory references are dedicated to outbound path 404, and all port C processor-to-memory references to outbound path 406. Similarly, all port A memory-to-processor references could be dedicated to inbound path 412, etc.

Because all of the inbound and outbound port paths are separate, the design of the present invention has great advantages over those designs where all three ports from all of the processors are contending for the same access to memory. In the latter type of design, where all three ports share the same path to memory, it is highly likely that the memory paths will be choked when the next port or processor attempts to get its memory reference out of the processor and on the way to memory. In the design of the present invention, however, there is a very low probability that a path will be choked since all three ports have both a dedicated inbound and outbound crossbar network. Therefore, because port references are not contending with each other, they can just go out of the processor. Thus, the design of the present invention reduces memory path contention and blocking from the processor standpoint, a feature which those skilled in the art will readily recognize affords a great advantage over alternative designs.

Although in the preferred embodiment of the present invention each individual processor in processor network 100 has three reference ports, those skilled in the art will readily recognize and appreciate that each individual processor could contain any number of reference ports. For example, if the number of reference ports per processor was increased to 10, the number of inbound crossbar networks 400 would also be increased to 10, and the number of outbound crossbar networks would also be increased to 10, so that each set of reference ports could have its own separate inbound and outbound paths to memory. Those skilled in the art will recognize that any number of reference ports per processor may be used without departing from the scope of the present invention.

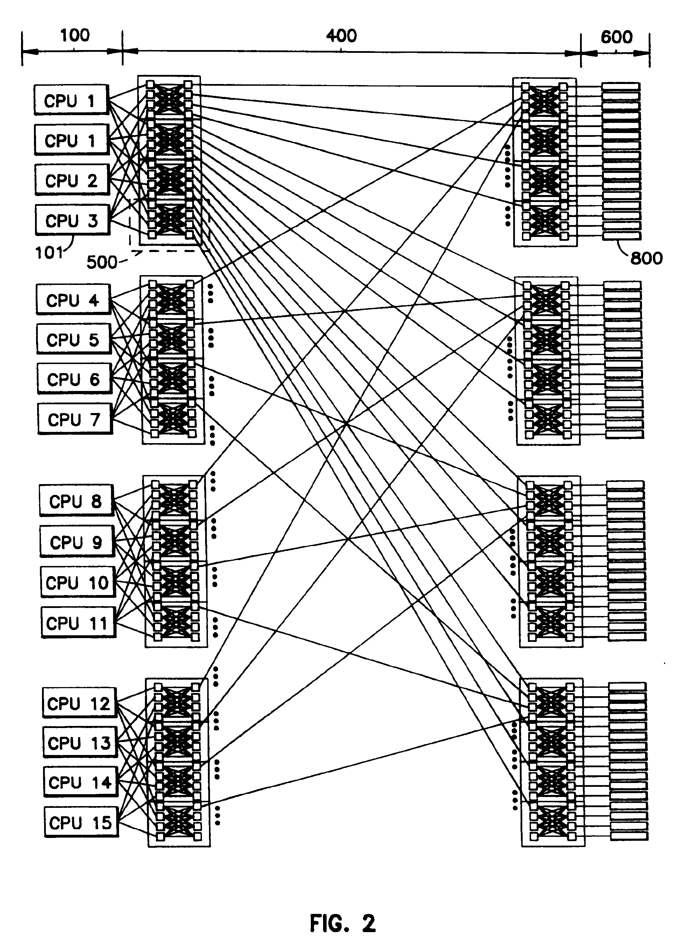

FIGURE 2 shows a more detailed block diagram of a single processors-to-memory crossbar network 400. Specifically, FIGURE 2 shows a sixteen processor version of the present invention interfaced to common memory 600 via a single multilayer crossbar network 400. The crossbar network 400 shown is only the outbound processors-to-memory crossbar network for all port A processor references. In the full embodiment of the present invention, there would be two more outbound crossbar networks 400 identical to the one shown in FIGURE 2 for ports B and C, and also three more identical cross bar networks 400 to handle inbound references for each of the three ports.

Because the architecture of the present invention is designed to be easily scalable, those skilled in the art will readily recognize and appreciate that the architecture of the present invention could also be constructed with any number of processors. For simplicity of illustration, however, only the sixteen processor embodiment of the present invention is shown in FIGURE 2.

In the preferred embodiment of the present invention, common memory 600 is divided into memory boards 800 such that there is one memory board per final output in the last layer of crossbar network 400. Thus, the sixteen processor embodiment of the present invention shown in FIGURE 2 contains 64 memory boards 800.

In the preferred embodiment of the present invention, each layer of crossbar network 400 is constructed from modular 4x4 crossbar switches 500. Each crossbar switch 500 has the ability to steer data from one of the four inputs to one of the four outputs. The crossbar network 400 between processor network 100 and common memory 600 for a four processor embodiment of the present invention (not shown) consists of a single layer of 4x4 crossbar switches 500. The sixteen processor embodiment of the present invention shown in FIGURE 2 consists of two layers of crossbar switches 500. One layer of crossbar switches 500, four times wider than the last, is added to the network as the number of processors 101 and memory banks 800 is increased by 4. Thus the 1024 processor embodiment of the present invention consists of five layers of crossbar switches 500.

Although the preferred embodiment of the present invention uses 4x4 crossbar switches 500, those skilled in the art will readily appreciate that the crossbar switch 500 could be constructed with any number of inputs and outputs. For example, crossbar network 500 of the present invention could be constructed with 8x8, 2x2, 2x4, 4x2, etc. In addition, those skilled in the art will realize that the ratio of processors to memory boards changes as the number of inputs and outputs in a crossbar switch changes. Those skilled in the art will recognize that these and other alternate embodiments can be substituted for the specific embodiment shown without departing from the scope of the present invention.

In the present invention, the modularity of architecture in the processors 101, crossbar network 400, and memory boards 800 permits construction of any scale of the computing machine of the present invention by simple replication. The same modules which comprise the smallest system are used without modification to construct the largest. Those skilled in the art will readily recognize that because the modularity and expansibility of the present invention are inherent in the architecture, they are independent of the technology chosen for implementation.

### Processor Design

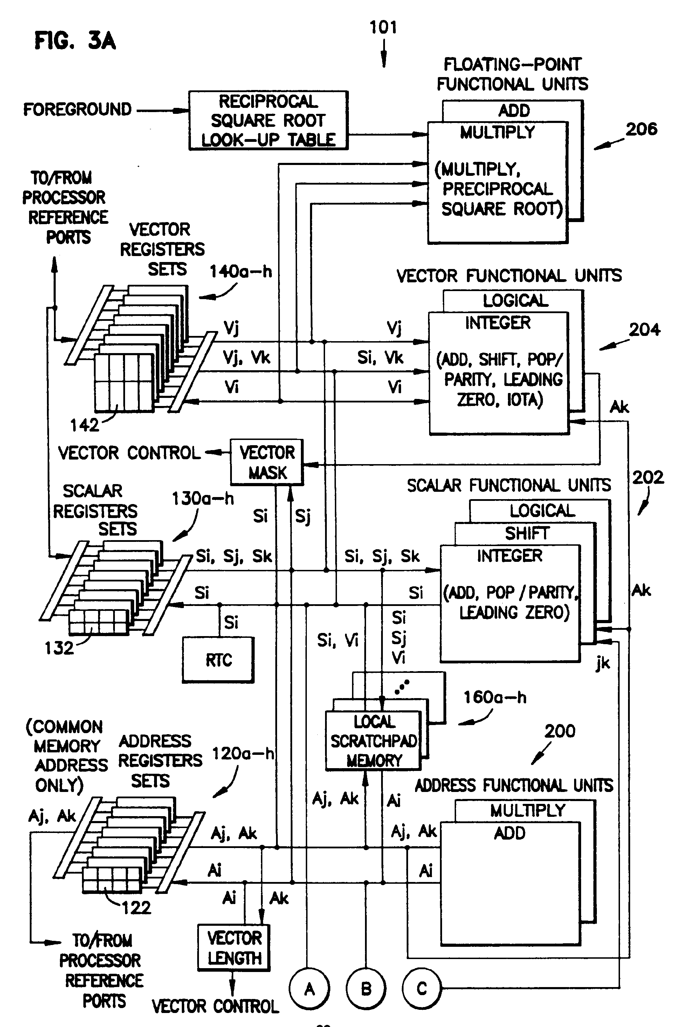

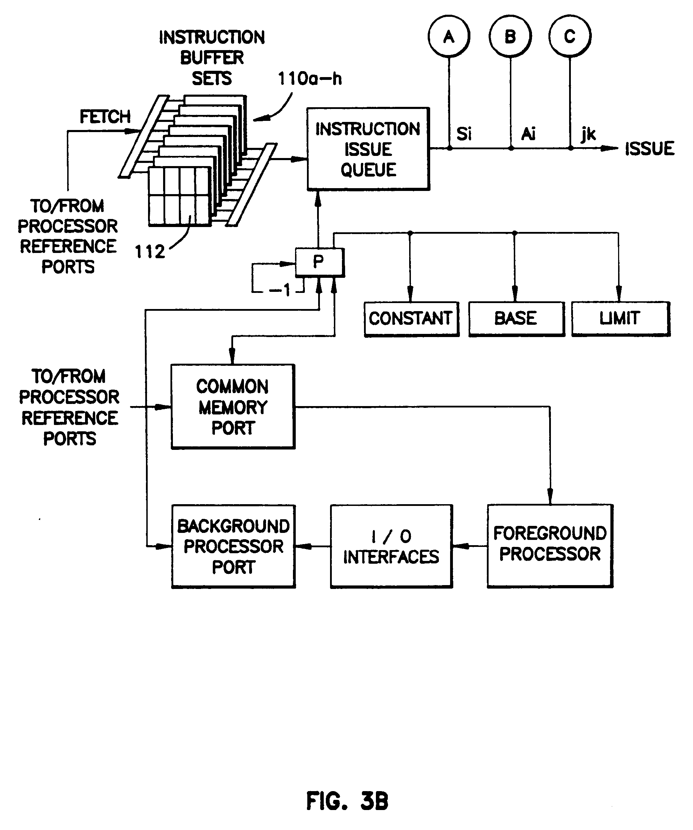

FIGURES 3A and 3B show a block diagram of a processor 101 of the type used in the present invention. In the preferred embodiment of the present invention, processor 101 is essentially a modified Cray 2 style processor, made by Cray Research Inc., the assignee of the present invention.

Each processor 101 contains a set of eight instruction pipelines or "threads" 110a-h. Each thread 110a-h has its own dedicated set of eight instruction buffers 112. The instruction buffers are blocks of high-speed instruction memory, and make up the instruction pipelines for each thread. The operation of a set of instruction buffers in Cray Research, Inc. single threaded machines is described more thoroughly in U.S. Patent No. 4,128,880, issued Dec. 5, 1978, to Cray, Jr., assigned to the same assignee as the present invention and incorporated herein by reference.

The present invention hides system latencies by context switching between threads in a processor. The present invention uses an "on demand" context switching method wherein a processor 101 executes one particular thread at a time for as long as that thread encounters no data dependencies from common memory to block issue. The processor of the preferred embodiment of the present invention switches context only when a thread encounters a hold issue condition caused by data not being received from common memory. Such a condition occurs when an instruction calls for use of a register that is reserved due to a load from common memory, on a branch to a memory location that is not in the instruction buffers, or when a processor is waiting for a semaphore from common memory (i.e., processor synchronization delays). A port block occurring when a processor attempts to read or write to common memory will not cause a context switch. Only when a thread is attempting to use data from common memory and that data is not yet received will a context switch occur. Once a block is encountered, processor 101 deactivates the current thread and context switches to the next thread in round robin order. A thread will not be context switched back into the processor until all of its data dependent issue blocks from common memory are resolved.

For example, assume processor 101 activates thread 110a. Processor 101 then executes the instructions in thread 110a contained in that thread's instruction buffers until an issue block data dependency from common memory is encountered, at which point it deactivates thread 110a, checks if all of thread 110b′s blocks are resolved, and if so, context switches to thread 110b. Processor 101 then executes the instructions in thread 110b contained in that thread's instruction buffers until an issue block data dependency from common memory is encountered, checks if all of thread 110c′s issue blocks are resolved, and if so, context switches to thread 110c, and so on. From thread 110h, processor 101 context switches back to thread 110a. If in the above example thread 110b did not have its blocks resolved when thread 110a encountered a block, processor 101 would simply check if all of thread 110c′s blocks were resolved, and if so, context switch to thread 110c, etc. Processor 101 would continue to context switch between threads in this round robin fashion until it completed execution of the program(s).

In the preferred embodiment of the present invention, the number of threads 110 in each processor 101 was chosen at eight to ensure that blocks causing a context switch from one thread to another are resolved by the time processor 101 again selects that particular thread for execution. The resolution of all memory related data dependencies must reliably take place in less than the number of program threads times the "typical" amount of time any one thread remains active. For a sixteen processor embodiment of the present invention utilizing 4x4 crossbar switches, and assuming a 13 clock period memory bank cycle time, simulations have demonstrated an average single memory reference latency of approximately 53 clock periods. Thus, if each thread in the system can run for at least seven clock periods without encountering a block, only 8 unrelated program threads are needed to cover a 53 clock period latency. Because the present invention uses vector processing, wherein a single vector instruction can busy processor resources for up to 64 clocks, those skilled in the art will recognize that the odds that a single thread will be active for seven or more clock periods are greatly improved. Even if a program contains a relatively small percentage of vector code (i.e., only one thread contains vector instructions), nearly all latencies would still be hidden. Therefore, the number of program threads resident in a processor 101 in the preferred embodiment of the present invention was chosen at eight for a system having sixteen processors. In highly parallel systems having more processors and an increased number of threads containing vector code, simulations have demonstrated that only four threads are necessary to adequately hide system latencies. Those skilled in the art will appreciate that the relatively small number of threads per processor employed in the present invention greatly reduces system overhead associated with operating system management and compiler task assignment.

Alternate embodiments having fewer processors would be more than adequately served as long as the largest system memory latency is hidden. Other alternate embodiments of the present invention may be obtained by combining different numbers of processors with different numbers of threads for each processor, the only requirement being that system latencies are hidden. Those skilled in the art will readily recognize that these and other alternate embodiments are calculated to achieve the same purpose as the preferred embodiment described herein, and may be substituted for the specific embodiment shown without departing from the scope of the present invention.

In the preferred embodiment of the present invention, the only blocks which cause a context switch are memory read data dependencies, branch instructions, or processor synchronization delays. By design, the context switching vector processor of the present invention does not cover those pipeline latencies internal to a processor which may occur during processing, such as functional unit latencies that create data dependent issue blocks. However, functional unit latencies are fixed, well known quantities (such as a floating point multiply latency or a floating point add latency). Mature compiler techniques can take advantage of these known latencies and hide scalar instructions in parallel threads behind the vector instructions with great accuracy. Thus the compiler can do a very efficient job of optimizing the code to take advantage of context switching. Another reason for not switching contexts due to functional unit latencies is to prevent the senseless "spinning" of contexts during efficient stretches of vector code that busy major resources for vector length clock periods, thereby effectively preventing all threads from issuing any instructions.

The multithreaded processor design of the present invention also lends itself particularly well to programmer code optimization. Because the programmer often knows at the time of programming the data dependencies that will occur during execution of the code, the context switches which will occur during execution in the processors of the present invention are very predictable. Therefore, because the programmer knows that a certain thread of code will have complete control of processor resources at a particular time, sophisticated programming techniques can be employed to take advantage of the multithreaded processing of the present invention. For example, a programmer could design the code to execute a floating point vector add and then hide some scalar instructions behind it to be executed while the floating add instruction is waiting due to the resulting functional unit latency which does not cause a context switch. To do this the programmer need simply design the code such that the scalar instruction is in the same thread as and immediately follows the floating vector add.

Each thread in a processor 101 requires an independent and private copy of its complete register resources. FIGURE 3A shows that a processor 101 contains eight sets of address registers 120a-h, eight sets of scalar registers 130a-h, and eight sets of vector registers 140a-h. Each address register set (for example, set 120a) contains eight address registers 122. Similarly, each scalar register set (e.g., 130a) and each vector register set (e.g., 140a) contains eight scalar registers 132 and eight vector registers 142, respectively. Address registers 122, scalar registers 132, and vector registers 142 are more thoroughly described in U.S. Patent No. 4,128,880, issued Dec. 5, 1978, to Cray, Jr., entitled "COMPUTER VECTOR REGISTER PROCESSING", and U.S. Patent No. 4,661,900, issued Arpil 28, 1987, to Chen et al., entitled "FLEXIBLE CHAINING IN VECTOR PROCESSOR WITH SELECTIVE USE OF VECTOR REGISTERS AS OPERAND AND RESULT REGISTERS", both of which are assigned to Cray Research Inc., the assignee of the present invention, and are incorporated herein by reference.

In sum, each of the eight threads 110a-h in a processor 101 has its own set of eight address registers 120a-h, a set of eight scalar registers 130a-h, and a set of eight vector registers 140a-h. Each of these register sets are private to a thread; therefore, each of the eight independent register sets in a processor 101 of the present invention corresponds to a different instruction thread. For example, address register set 120a, scalar register set 130a, and vector register set 140a all correspond and are private to thread 110a; address register set 120b, scalar register set 130b, and vector register set 140b all correspond and are private to thread 110b; etc. Those skilled in the art will appreciate that reserving a register set for each thread increases processing speed and efficiency over a scheme where multiple threads share a single register set; the scheme used in the preferred embodiment of the present invention eliminates the otherwise required lengthy and time consuming process of saving each thread's register state each time a context switch occurred.

Each thread 110a-h requires only eight of each type of register (address, scalar, and vector) because of the memory latency hiding ability of the context switching processor of the present invention. Those skilled in the art will readily recognize that this small number of registers per processor greatly reduces the complexity and physical size of the processors used in the preferred embodiment of the present invention. First, issue control is greatly simplified, and second, use of instruction parcels larger than 16 bits is avoided, thus packing more instructions into the pipelined threads and reducing memory traffic in the crossbar networks due to instruction fetches.

Although each thread in a processor requires an independent and private copy of its complete register of resources, eight full copies of all associated register control (such as vector length and address counters, reservation flags, etc.), along with eight way multiplexing circuits to steer data between the active thread and the functional units are not necessary. Those skilled in the art will recognize that there are varying levels of compromise that can be made which minimize the impact of multiple threads on processor complexity and that have a dramatic effect on hardware levels.

For example, in one possible embodiment of the present invention, a single bank of RAM would be used for each register, with the RAM having a size equal to the number of threads times the number of elements in the register. For example, the RAM for vector register V0 in an eight thread processor would be 64 elements times eight threads, or 512 words deep. The simple base address register selects the active thread by pointing to a 64 element region in the RAM. This implementation has the hardware advantages of requiring no more register control hardware than a single context processor, except for the thread pointer. Only the actual RAM has grown. The disadvantage is that a register reservation on VO for any thread reserves it for all threads. Unnecessary issue blocks due to memory conflicts between contexts are caused by the additional register dependents, even though the functional resource may be free.

This register dependence can be avoided in a second embodiment of the present invention wherein multiple banks of RAM for each register are used, with each bank still containing multiple thread sets that are addressed by simple pointers. An improvement on the above single bank example would be to have two banks of RAM, each containing four program threads. One bank would handle even number threads, and the other bank would handle odd threads. The active thread would alternate between the banks. Since consecutive active threads would reside in different banks, thread dependencies would be minimized. Only a two way multiplex between the registers and functional resources is needed, with two sets of register controls.

Those skilled in the art will readily recognize that as growing circuit integrations permit larger scale parallel systems to be practical, increasing numbers of contexts can be included by logical expansions of this scheme. For instance, 16 threads could reside in four banks of four threads each, or 64 threads in eight banks of eight threads. Such large numbers of available contexts would permit computers with extremely massive parallelism to effectively hide the latency of a shared memory.

In the preferred embodiment of the present invention, a processor 101 can execute one instruction per clock period from the active thread and 2 FLOPS per clock period. Thus, for example, with a clock speed of 4 nanoseconds, each processor 101 of the present invention is capable of a peak execution rate of 250 MIPS and 500 MFLOPS. System peak performance (1024 processors) at 4 nanoseconds would be 256 GIPS and 512 GFLOPS. At a 2 nanosecond clock period, processor peak rates are 500 MIPS and 1GFLOP, for a corresponding system peak with 1024 processors of 512 GIPS and 1 TERAFLOP. These numbers would double again for a system having a 1 nanosecond design clock period.

In the preferred embodiment of the present invention, each of the threads 110a-h has access to a small local high-speed "scratch pad" memory 160a-h. Registers can be spilled to these scratch pad memories 160a-h if necessary. Also constants, table values, tags for thread identification and management, etc., can also be kept there. Access to the scratch pad memories 160a-h is real time, and latencies associated with it do not cause a context switch.

The eight threads 110a-h of a processor 101 of the present invention share the functional unit resources within a processor 101. Separate address functional units 200 are associated with the sets of address registers 120a-h, the sets of scalar registers 130a-h are supported by scalar functional units 202, and the sets of vector register sets 140a-h are supported by vector functional units 206. Floating point functional units 204 are shared by the scalar and vector register sets. Those skilled in the art will ready recognize that the functional unit resources could be expanded to include fewer or additional functional units operations than are shown in FIGURE 3A without departing from the scope of the present invention. In the preferred embodiment of the present invention, all operands are 64 bits wide.

Each processor 101 in the preferred embodiment of the present invention has three ports to common memory, ports A, B and C (not shown in FIGURE 1). Port A is a read-only port used for multi-port vector read memory references and I/O memory read references. Port B is also a read-only memory, which is used for multi-port vector read memory references and instruction fetches. Port C is a read/write port, handling single port vector reads, vector writes, scalar reads and writes, and I/O writes to common memory. Each port has two main portions, the input circuitry and the output circuitry.

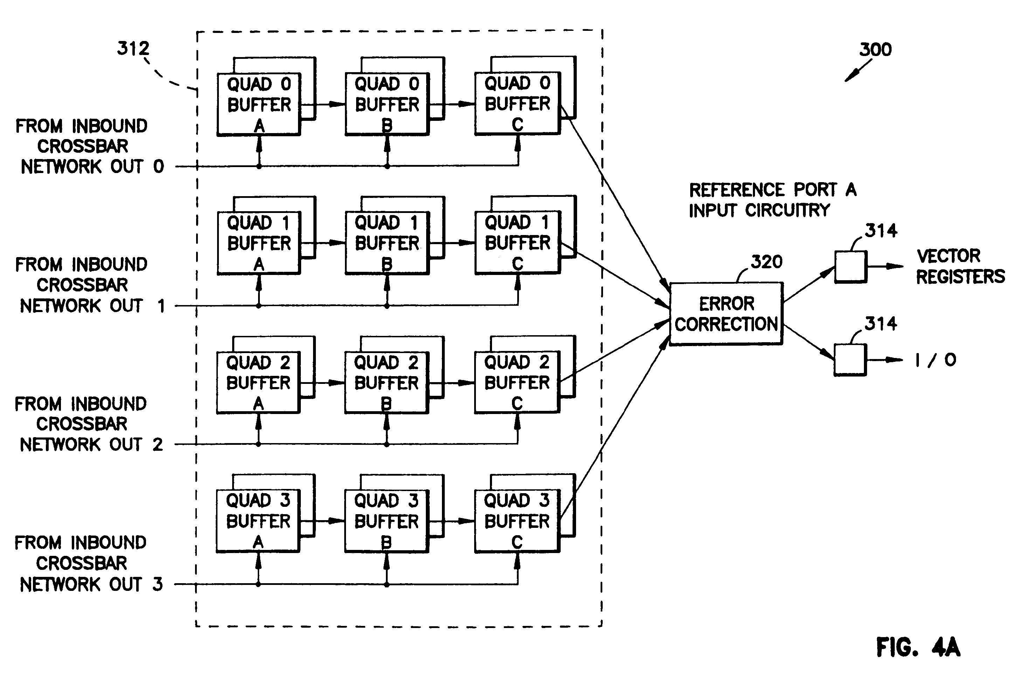

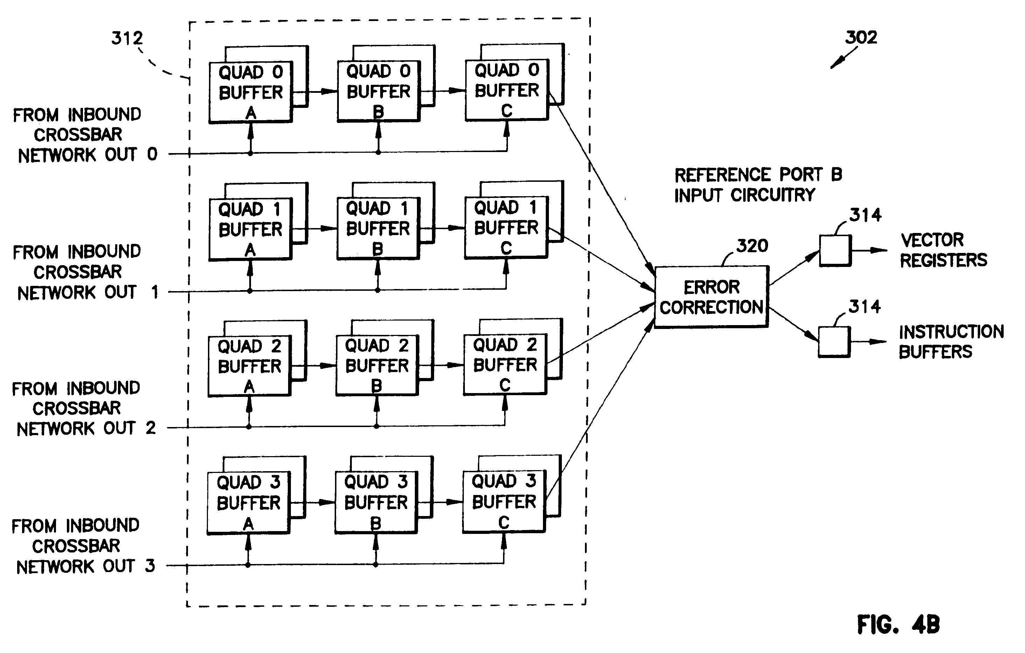

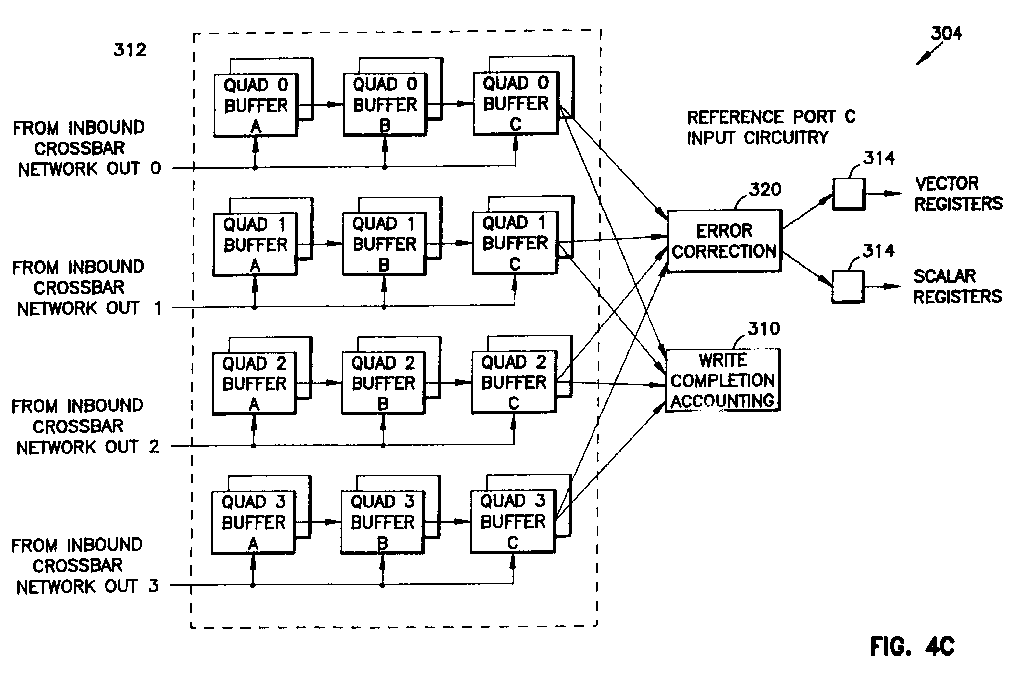

FIGURE 4A shows a block diagram of Port A input circuitry 300, FIGURE 4B shows a block diagram of Port B input circuitry 302, and FIGURE 4C shows a block diagram of Port C input circuitry 304. On read only memory ports A and B, input circuitries 300 and 302 are capable of receiving one message from memory per clock period, consisting of 88 bits of data, 16 bits of bank address (for failure recording), 16 bits of destination code (steering internal to the processor), and a valid bit. On read/write memory, port C, input circuitry 304 has the ability to receive one message per clock period from memory. If the original request was a read, the input message has the same parts as the input message for the read-only ports, plus one additional bit indicating that the reference was a read. However, if the request was a memory write, the input memory bits are redefined to provide only enough information for write completion accounting, namely three bits of context information and a valid bit. With the exception of this special tap on the read/write input port for write completion accounting, all three ports input circuitry looks approximately identical. Each has an error correction and detection unit 320, error address latches 314, and steering circuits 312 to direct the memory data to the processor resource specified in the destination code.

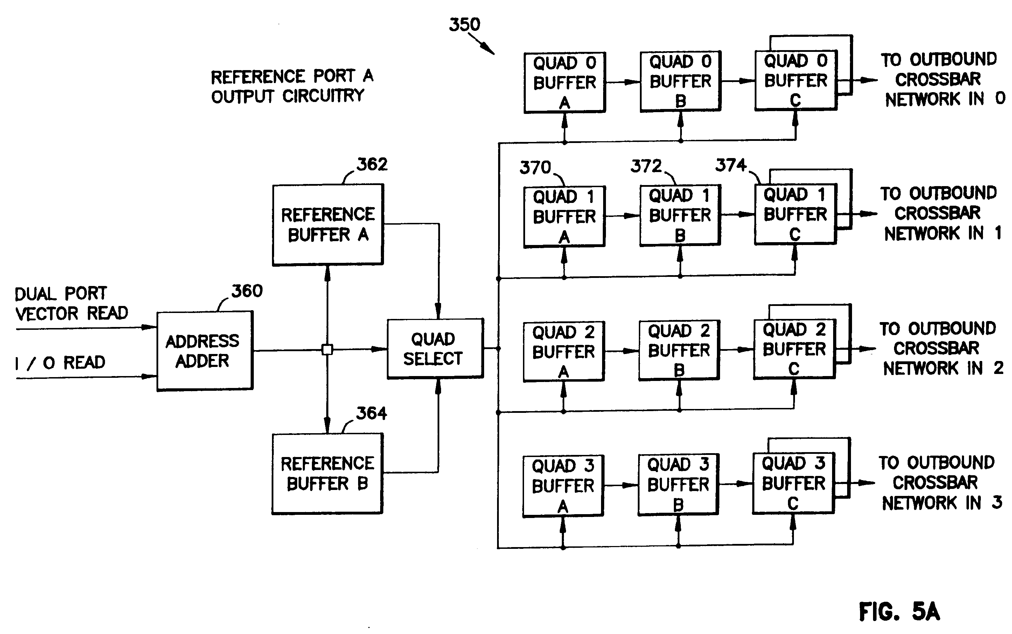

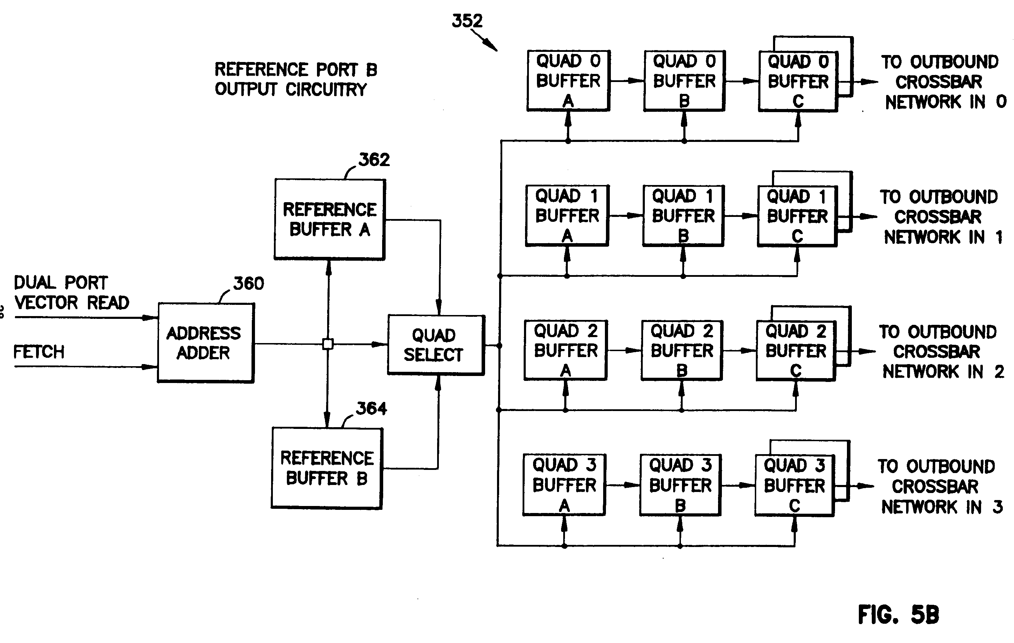

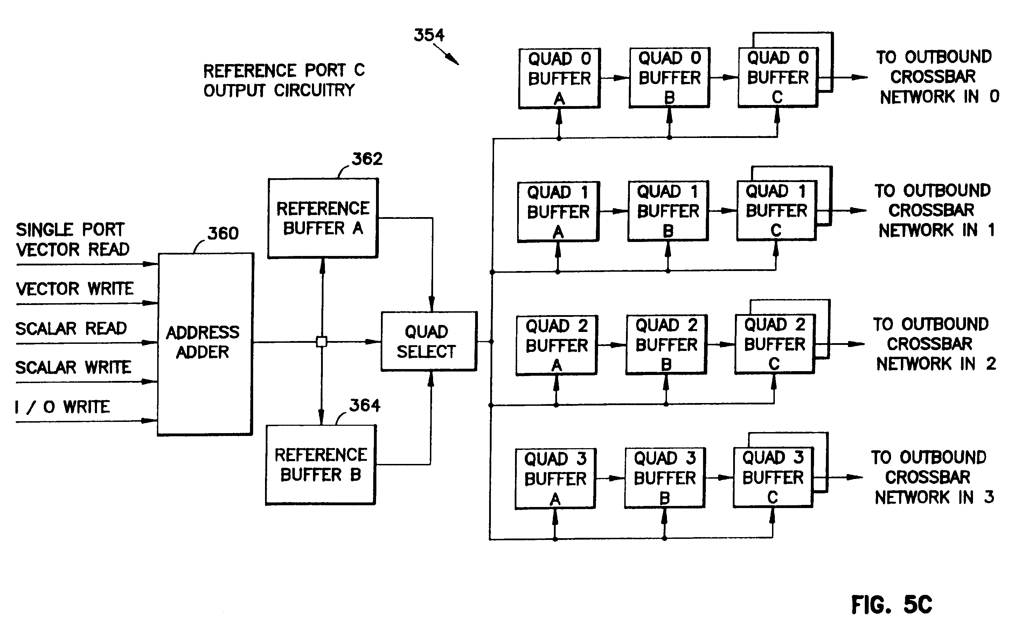

FIGURE 5A shows a block diagram of Port A output circuitry 350, FIGURE 5B shows a block diagram of Port B output circuitry 352, and FIGURE 5C shows a block diagram of Port C output circuitry 354. On read-only memory ports A and B, output circuitry 350 and 352 is capable of transmitting one message to memory per clock period. Each message consists of 34 bits of address, two bits of mode information (for the shared registers), 16 bits of destination code, and a valid bit. On read/write memory port C, output circuitry 354 has the ability to send one message per clock period to memory. This message may consist of a read request or a write request. If it is a write request, the message has 34 bits of address, 88 bits of data, two bits of shared register mode information, three bits of context information (for write completion accounting), a write bit and a valid bit. If the message is a read request, bits in the data field are reassigned so that the message carries the same information as the output message from the read-only ports.

As with the input circuitries, the structure of the three output circuitries ports are similar, with only the bit width of the messages and the processor resources that are steered to the port being different. Thus, this specification will describe the operation of port output circuitry with reference to FIGURE 5A. Those skilled in the art will readily recognize that the following description applies equally well to Port B output circuitry 352 as shown in FIGURE 5B, and Port C output circuitry 354 as shown in FIGURE 5C, with only minor differences applying.

Referring now to FIGURE 5A, data from the processor resources are merged into the memory port address adder 360. This adder 360 is capable of summing three numbers per clock period. The first clock period of a vector or block transfer, these numbers are the Base Address, starting address, and increment value. Thereafter, the numbers are the increment value and the recirculated absolute address. Scalar reference address arithmetic may involve adding Base Address, a constant from the instruction stream, and a register value representing the memory address together to form the absolute address. This absolute address is tested for being greater than or equal to the Base Address, and less then or equal to the Limit Address. The Base and Limit Addresses can represent one of up to eight secure blocks in memory. A selected block is secured by a user instruction. In parallel with the address manipulations, the error correction and detection code bits are generated on the write data.

Each port has dual reference buffers associated with it, reference buffer A 362 and buffer B 364. Each reference buffer is capable of absorbing an entire 64 element vector stream if necessary. The reference buffers are used alternately in the event the memory crossbar network is unable to accept messages at the rate of one per clock period.

There is a read and write pointer into each reference buffer A 362 and B 364. If these pointers are equal, the buffer is empty. When the memory crossbar network is unable to keep up the message stream emerging from the port address adder 360 and error correction/detection circuits, messages are written into a reference buffer at buffer addresses indicated by the write pointer, which then increments for each message. Starting from the clock period the first "resistance" is encountered to a stream, all subsequent messages in the stream are written into the reference buffer. Messages to be injected into the crossbar network now come from the reference buffer addresses indicated by the read pointer instead of directly from the message stream from the processor. The read pointer increments each time a message is accepted by the network, until the read and write pointers are equal and the stream is complete. The pointers are cleared prior to the next reference stream.

While one reference buffer is in the process of being emptied, a stream of memory references can be loaded into the other buffer. When the first buffer is emptied, the messages from the head of the second buffer are sent to the memory crossbar network with no delay. The empty first buffer is then available to accept the next stream of references from the processor. Thus, a choked memory port will still allow two full length vector references to that port to proceed to completion from the processor's standpoint.

In the preferred embodiment of the present invention memory reference messages from reference buffer A 362, B 364, or the processor are steered to one of four sets of quadrant buffers by a decode of the lowest order two bits of the message steering address. Each set of quadrant buffers is composed of three buffers, each able to hold one message. Messages enter buffer C 374 if empty, or buffer B 372 if buffer C 374 is occupied and buffer B 372 is empty, or buffer A 370 if both B 372 and C 374 are occupied and A 370 is empty. Data can also move from buffer A 370 to B 372 and from buffer B 372 to C 374. Message ordering is maintained between the three quadrant buffers. If all three buffers contain data and buffer C 374 empties, B 372 will move to C 374, A 370 will move to B 372 and any waiting new message will enter buffer A 370.

Memory messages are broken into two packets in quadrant buffer C 374 as it is transmitted to the first level of 4x4 crossbar switches in the memory crossbar network. Communication between quadrant buffer C 374 and the entry buffers of the first level of the crossbar network is the same as between any two 4x4 crossbar switches, as described hereinbelow. Because of this two packet path, data movements between quadrant buffers takes place at best every two clock periods. But the quadrant buffers can be filled from the processor or reference buffers at the rate of one per clock. The two packet organization of memory messages leaving the port means that vector or block transfer strides that are multiples of four will proceed at a maximum rate of one message every two clock periods. Odd strides, strides of one or two, or odd multiples of two all can proceed at the rate of one message per clock period.

### Processor to Memory Crossbar Network

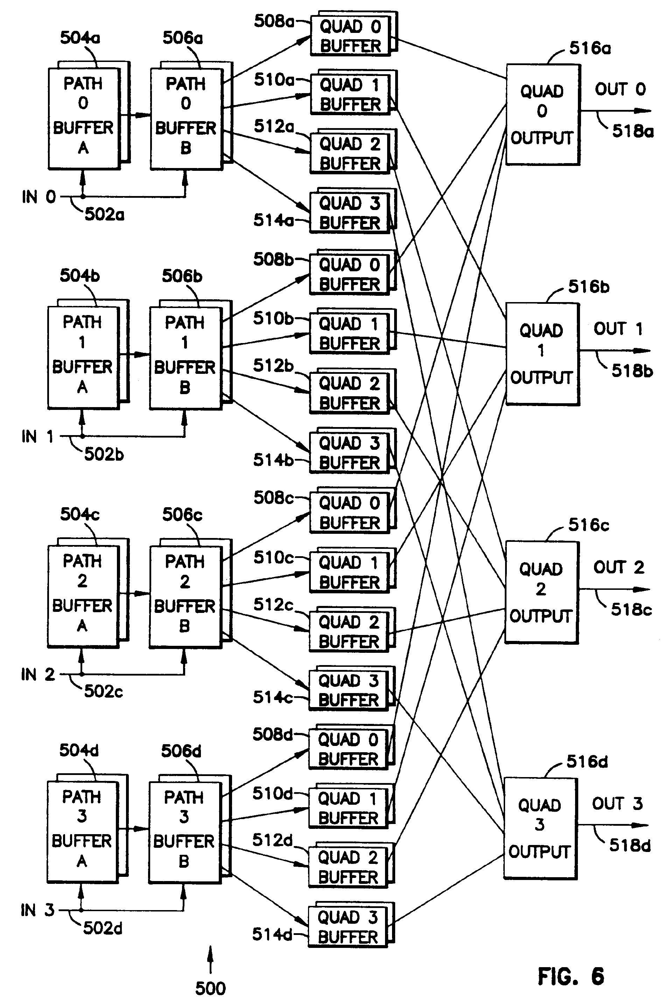

FIGURE 6 shows a block diagram of a 4x4 crossbar switch 500 of the preferred embodiment of the present invention. Those skilled in the art will recognize that the crossbar switch of the present invention could also be constructed as an 8x8, 2x2, 2x4, 4x2, etc., or virtually any m x n number of inputs and outputs, without departing from the scope of the present invention. Each 4x4 crossbar switch 500 used in the preferred embodiment of the present invention has the ability to steer data from each of the four input paths 502a-d, to one of the four output paths 518a-d, with a best case transit time of four clock periods. Identical crossbar switches 400 are used in both the inbound and outbound crossbar networks. Although the following Detailed Description describes only the transfer of an outbound processor-to-memory reference through an outbound crossbar network, it shall be understood , as those skilled in the art will appreciate, that the inbound crossbar networks operate in essentially the same manner as transfer through the outbound crossbar networks described below.

In the preferred embodiment of the present invention, inbound and outbound references are received by the crossbar networks in two sequential packets. For the read/write ports, the first packet contains all control information such as mode bits, destination code, bank or steering bits, and chip address. The second packet contains data. For the read only ports, the first packet contains control information such as mode bits, destination code and bank or steering bits. The second packet contains the chip address. Those skilled in the art will readily recognize that this method of evenly distributing the reference bits between the two packets helps to minimize the interconnects required to implement the crossbar network of the present invention.

In the preferred embodiment of the present invention, the second packet follows the first packet into and through the switch on the immediately following clock period, travelling along the same interconnect path as the first packet. Because of this, each data movement takes two clock periods. The second packet exits crossbar switch 500 exactly one clock period later than the first packet.

Those skilled in the art will readily recognize that packeting the memory references and cycling them sequentially through the crossbar networks 400 reduces by a factor of two the number of interconnects required to implement a crossbar switch. In modern designs, there are more gates inside a chip by ratio than there are available interconnects to be able to use them. Therefore, interconnects are the scarce resource in many chip designs. For example, assume a 4x4 crossbar switch having four independent paths in and four independent paths out, and a 120 bitwide memory reference. The number of interconnects required to make such a crossbar switch would thus be eight times 120. Those skilled in the art will readily recognize that this is a very large number, much larger than could be fit on a single chip, and in fact much larger than could be fit on several chips. By packeting the memory references, the 120 bitwide memory reference is reduced by a factor of two. This reduces all system interconnects by a factor of two as well, a reduction which can be very significant. Those skilled in the art will recognize that this packeting method used in the present invention greatly compacts the system design, in that a crossbar switch can be implemented with fewer chips.

Each of the input paths 502a-d of crossbar switch 500 is composed of at least one entry buffer. The actual number of entry buffers is a variable depending upon on how far apart the crossbar switches are placed in the crossbar networks. The number of entry buffers in a crossbar switch is variable depending on the round trip time for communication between crossbar switches. As each clock period is added to the communication time, an additional entry buffer is needed. The purpose of the entry buffers is to cover the communication time between crossbar switches so that multiple message packets can be sent. Therefore, in the embodiment of the present invention shown in FIGURE 6, where the crossbar switches communicate in one clock period, there are two entry buffers, buffer A 504 and buffer B 506.

Each of these buffers 504 and 506 can contain both packets of one message. A message entering crossbar switch 500 through one of the input paths 502a-d is first latched the corresponding buffer B 506 for that path if it does not already contain another message. If buffer B 506 is occupied, the message is instead latched into buffer A 504. Once buffer B 506 is empty, messages contained in buffer A 504 can then be latched into buffer B 506. If both buffer B and buffer A are full when another message attempts access, that message simply waits until a buffer is free before entering the crossbar switch.

Once the first packet of a message is latched into buffer B 504, buffer B 506 decodes the two message steering bits to determine which of the four outputs 518a-d the message is to be routed to. In this manner, in the preferred embodiment of the present invention, buffer B 506 can steer the entire message before both packets of the message are present.

After it decodes the two message steering bits, buffer B 506 replaces the two message steering bits in the first packet with two bits representing from which of the four input paths 502a-d the message entered crossbar switch 500. In this manner, a return address back to the originating processor is built in the message steering bits as a message travels through the successive layers of crossbar switches on its way to common memory. After the data is retrieved from memory, the processor return address information is available in the message steering bits to guide the retrieved data back to the originating processor. Similarly, for inbound references, a return address indicating from which memory bank the reference came is available in the message steering bits once the message gets back to the processor. In this way, if there was an error in the data, the processor knows which memory bank the erroneous message came from, thus helping to pinpoint where the error occurred.

This bit replacing scheme reduces system interconnects and message length as it eliminates the necessity of sending the processor return address along with the message. Instead, the bit replacing scheme of the preferred embodiment of the present invention simply uses the same bits and interconnects to steer messages on the way out to automatically generate the processor or memory bank return address.

The message steering bits as decoded in buffer B 506 determine which of the four "quadrant" buffers 508-514 a message goes to after leaving buffer B 506. As with input buffers A 504 and B 506, each of the quadrant buffers 508-514 can contain both packets of one message. If the destination quad buffer 508-514 is empty, a reference can leave buffer B 506 and enter the relevant quad buffer 508-514.

The purpose of quadrant buffers 508-514 is to reduce message contention and blocking in the crossbar network. For example, if output path 518a is blocked, output buffer 516a will be full, containing a message waiting for the path to clear. When another message headed for output path 518a enters crossbar switch 500 on input path 502a, for example, that message will move into quadrant buffer 508a, where it will wait for output select circuit 516a to clear. Then if an additional message destined for any other output path enters input path 502a, that message will not be blocked from access to its destination ouput, because it simply moves into the appropriate quadrant buffer. In this manner more messages can "get around" blocks in the crossbar network. Only if an input path is blocked all the way to the entry buffers will a messages entering on that path be completely blocked off from all output paths. If quadrant buffers 508-514 in crossbar switch 500 of the present invention were not there, all four outputs would be blocked. Through the use of quadrant buffers 508-514, only 1 of 4 output paths is blocked at that point. Those skilled in the art will readily recognize and appreciate that quadrant buffers 508-514 greatly reduce the possibility of message contention and blocking in the cross bar networks.

After both packets of a message have entered one of the quadrant buffers 508-514, the message becomes eligible to be steered out the appropriate output select circuit 516a-d. Each output selection circuit 516 looks for messages from the corresponding quadrant buffer 508-514 from each input path 502a-d. For example, output select circuit 516a looks for eligible messages from quadrant "0" buffers 508a, 508b, 508c, and 508d, which entered crossbar switch 500 from input paths 502a, 502b, 502c, and 502d, respectively. If there is only one eligible message in the appropriate quadrant buffers 508-514, the output select circuit 516a-d simply transmits that message to the corresponding output path 518. In the preferred embodiment of the present invention, if there is more than one eligible message in the appropriate quadrant buffers 508-514, output select circuit 516a-d transmits the next message in round robin order from the last quadrant buffer selected. For example, if output select circuit 516c selects quadrant buffer 512b for transmission, it would next select quadrant buffer 512c for transmission if 512c had an eligible message and more than one eligible message were present.

Once a message travels through an output path 518a-d of crossbar switch 500, the message proceeds on to the next layer of crossbar switches (or common memory if the transmitting crossbar switch was in the final layer of the outbound crossbar network, or a processor if the transmitting crossbar switch was in the last layer of the inbound crossbar network).

The following table traces a message (the two packets of the message are labeled "packet 0" and "packet 1") through the crossbar switch 500 of FIGURE 6 from Input Path 0 502a to Quad 3 output path 518d with no other contending data:
- Clock 0:: Msg. packet 0 enters Path 502a Buffer B 506a.
- Clock 1:: Msg. packet 1 enters Path 502a Buffer B 506a. Msg. packet 0 enters Path 502a Quad 3 Buffer 514a.
- Clock 2:: Msg. packet 1 enters Path 502a Quad 3 Buffer 514a.

Quad 3 Output select circuit 516d recognizes eligible reference.
- Clock 3:: Msg. packet 0 steered to Quad 3 Output 518d.
- Clock 4:: Msg. packet 1 steered to Quad 3 Output 518d.

Smooth communication between successive layers of the crossbar network of the present invention is achieved through use of a response bit. After a message has moved from buffer B 506 to a quad buffer in the destination crossbar switch, the destinating crossbar switch asserts a single response bit back to the transmitting output of the previous crossbar switch. In this manner, the transmitting crossbar switch "knows" it can send two messages to the destination crossbar switch (one would enter buffer B 506 and the second would enter buffer A 504) before it must pause to wait for the response bit. A single response bit received before additional messages are transmitted means that there is room for one more message in the entry buffers A 504 and B 506 of the destination crossbar switch. Two response bits mean that there is room for two messages in the destination crossbar switch.

The round trip communication time between crossbar switches is determined by the amount of time for a reference to go out of the transmitting crossbar switch and the time when a response bit is received back from the receiving crossbar switch. The number of entry buffers per crossbar switch required is one-half of this roundtrip communication time. In the preferred embodiment of the present invention, communication between switches is timed such that the response bit is received by the transmitting crossbar switch just in time for the transmitting switch to send out its next message (if there is one). If the timing were not this way, those skilled in the art will realize that a message at the transmitting crossbar switch would have to wait. Using the timing method of the present invention, however, the response bit is received such that an available output message can go out immediately.

Those skilled in the art will readily recognize and appreciate that the crossbar network design of the present invention greatly increases the scalability of the architecture. The architecture is very scalable because each crossbar switch need only communicate with its neighbors, those crossbar switches which it is actually hooked up to. Each individual crossbar switch does not need to have global information about the whole layer or about what is happening two or three layers ahead. Each crossbar switch needs only local information to arbitrate and send data through. Similarly, the processors do not need to have global knowledge before sending out memory references. In this way, the processors do not have to make sure that an entire data path from the processor to the memory bank is clear before sending out a message. Using the crossbar method of the present invention, the processors simply "fire and forget". Those skilled in the art will appreciate that because the architecture of the present invention requires no global arbitrator, the system of the present invention scales very easily just by simple replication because there is no need for any redesign of either the processor, the crossbar switches, or the operating system. One need simply rehook the components in a different configuration and the architecture instantly scales.

Another advantage of the crossbar network of the present invention is that as long as each crossbar switch works the same, it does not matter what type of processors are used nor how fast the memory is. Any multiple thread type of processor is adaptable to the system of the present invention. Also, even if every bank of memory were at a different speed, the architecture of the present invention would still work without having to do any complicated redesign. Those skilled in the art will recognize that the architecture of the present invention is therefore extremely flexible in this respect.

In the preferred embodiment of the present invention, the crossbar circuitry is designed such that a maximum of four levels of logic are performed each clock period. This design constraint results in a best case transit time of four clock periods through crossbar switch 500 for the preferred embodiment of the present invention. Those skilled in the art will recognize that restraining the design to four levels of logic per clock period permits the use of slower circuit technology while still maintaining a high clock rate, thus resulting in lower system power and cooling requirements and permitting utilization of larger scale integration levels. Because a large fraction of the hardware of the computing machine of the present invention consists of the crossbar switching network, those skilled in the art will readily appreciate that the use of larger scale integration levels in the preferred embodiment of the present invention results in an enormous attendant hardware savings, a large power savings, and allows use of lower, cheaper hardware technology.

Yet another advantage of the crossbar network of the present invention is tied to the context switching aspect of the processors. Those skilled in the art will appreciate that one feature of context switching processors is that processor idle time is greatly reduced, substantially increasing processor efficiency. Because there is almost zero processor dead time, an incredible demand is placed on the memory and on the crossbar memory arbitration network since the processors are constantly making memory requests. Because of the context switching aspect of the processors used in the present invention, a processor does not care whether one of its threads has to wait longer for its memory references to be satisfied, because the processor can simply context switch to the next thread while the first thread is waiting. Thus, the context switching processor of the present invention is not time sensitive and can therefore operate efficiently even with a larger memory latency. Essentially, the design of the present invention has traded memory latency requirements for an increased bandwidth so that a large volume of data can be moved. Those skilled in the art will readily recognize and appreciate that such a design scheme results in a very high throughput machine at a very high bandwidth; a design which is particularly well suited for highly parallel vector processing tasks.

### Common Memory Design

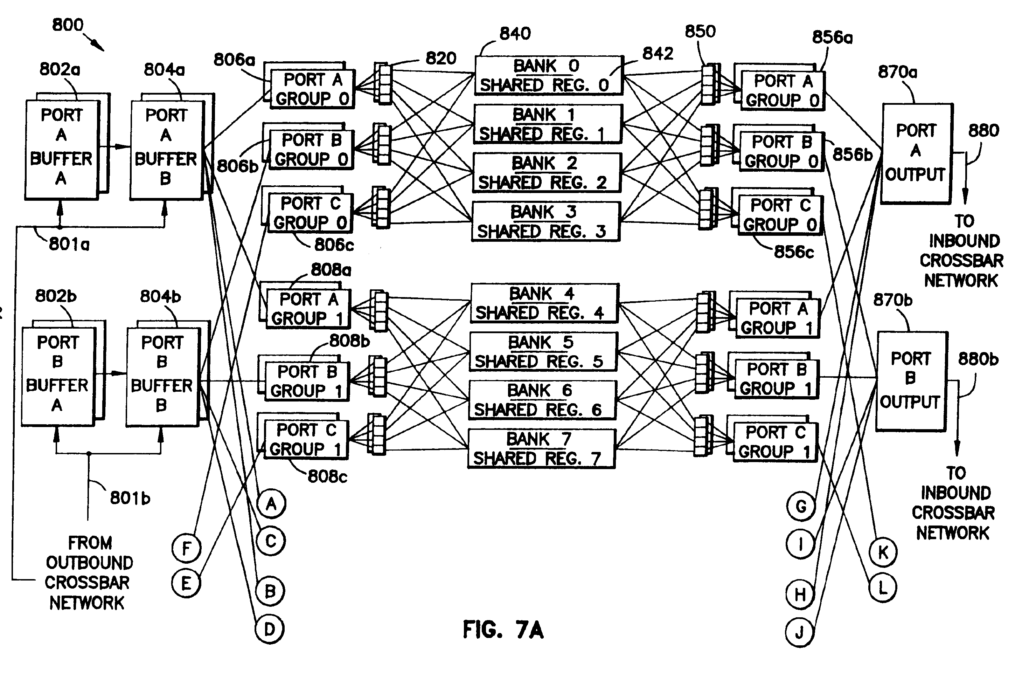

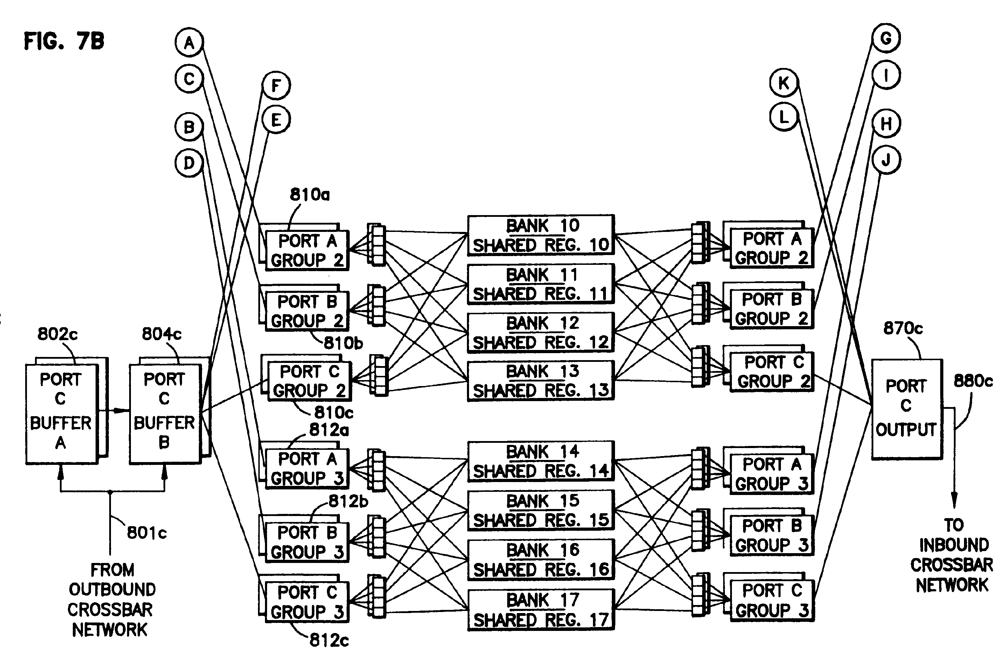

FIGURES 7A and 7B show a block diagram of a memory board 800 of the type used in the preferred embodiment of the present invention. Memory board 800 contains input circuitry to take processor reference messages from the crossbar network, sixteen banks of memory, and output steering circuitry to send memory reference messages through the inbound crossbar network back to the originating processor.

In the preferred embodiment of the present invention, each memory bank 840 consists of 23 memory chips and 5 bank control logic chips. Twenty two of the memory chips are 256K by 4 bit static RAMs with a cycle time of less than 13 clock periods. These 22 memory chips form a 64 bit data word with 16 check bits for error detection and correction. The 16 check bits permit correction in the event of the failure of all four bits in a static RAM memory device. The error detection scheme used in the preferred embodiment of the present invention is referred to as a "chip isolation" scheme, a description of which can be found in U.S. Statutory Invention Registration application Serial No. 400,071, filed August 30, 1989, to Schwoerer, entitled "BIT DETECTION METHOD FOR ENHANCED SEC-DED ERROR DETECTION AND CORRECTION IN MULTI-BIT MEMORY DEVICES", assigned to the same assignee as the present invention and which is incorporated herein by reference. The twenty third memory chip is a 256K by 1 bit chip that stores the memory lock bits.

Those skilled in the art will readily recognize and appreciate that memory banks 840 need not be constructed with the same logic design as the specific embodiment described herein, and that any arrangement calculated to achieve the same purpose may be substituted for the specific embodiment described. For example, the architecture of the present invention would also support a memory design utilizing a very large directly addressable memory of SRAM and DRAM. Other memory designs could also be used without departing from the scope of the present inveniton.

There are two methods of synchronizing common memory references from the multiple processors in the preferred embodiment of the present invention. These are the memory lock bits, located in the 23rd memory chip, and shared registers, located in the five bank control logic chips. The memory lock bits are used to lock and reserve individual memory locations. In the preferred embodiment of the present invention, there are two types of instructions, one that uses the lock bits and one that does not. A locked memory write reference will write data into an unlocked memory location and then cause the location to become locked. If a memory location is locked it must be accompanied by an appropriate read reference to unlock it. Those skilled in the art will appreciate that these lock bits can be used to synchronize data between processors. A reference that is rejected by the memory due to a locked condition of the location is returned to the processor with a rejection code. The processor will then need to reissue the reference until it gains access to the location.

The second manner in which processor synchronization is accomplished is by use of the shared registers. The 5 bank control logic chips in each memory bank contain memory sequencing circuitry, memory lock read control, and the special shared register used for processor synchronization. This shared register operates in one of three modes; as a fetch and increment (decrement) register, as an unlocked data register, and as a semaphore register. An example of use of registers as semaphores can be found in U.S. Patent No. 4,754,398 to Pribnow, issued June 28, 1988, entitled "SYSTEM FOR MULTIPROCESSOR COMMUNICATION USING LOCAL AND COMMON SEMAPHORE AND INFORMATION REGISTERS", which patent is assigned to the same assignee as the present invention and is incorporated herein by reference.

Those skilled in the art will readily recognize that there are several distinct advantages to having the shared registers directly on the memory banks. In this way, the burden of arbitration for the shared registers between processors is taken off the processors themselves and is instead accomplished by the crossbar network. Because the shared registers are located on the memory banks and are part of each memory bank control, shared register access arbitration between the processors is accomplished by the crossbar network, the same network that arbitrates memory references. Therefore, since shared register accesses look as though they are simply another memory reference, there is no additional hardware required to accomplish the arbitration between processors for shared memory. Those skilled in the art will recognize that this scheme offers a distinct advantage over a design using separate paths and separate arbitration networks to coordinate and synchronize multiple processor systems.

Another advantage of having all the shared registers on the memory side of the architecture rather than on the processor side, is that such a design scales very easily. Therefore, when the scale of the system of the present invention is changed, no redesigns need be made in each individual processor or on a global arbitrator (because the architecture of the present invention does not require a global arbitrator). Rather, the shared register arbitration of the present invention is such that all processors can talk to as many number of processors as is desired and none of the semaphores and none of the registers need be on the processor side.

In the fetch and increment mode of the shared registers, loop counts can be distributed amongst the various processors very easily. All a processor need do is read the shared register and it automatically increments the register and gives the processor an updated loop count. The next processor then reads the shared register, gets the next loop count and it then increments the register automatically. Those skilled in the art will readily recognize that this "autoincrement" feature of the fetch and increment mode of the shared registers is an extremely powerful function of the shared registers, and offers distinct advantages over alternative methods of implementing a fetch and increment for distribution of loop counts used in the past. For example, one old way to implement a fetch and increment for loop count distribution where the shared registers are not located at the memory, there must be a separate memory location that is the loop counter, and the semaphore or processor locks that memory location, reads it into the processor, increments it, writes is back out and unlocks it. The total locking time that the counter is locked up can be dozens or even hundreds of clock periods. In a very highly parallel system with a large number of processors, in order to distribute a loop count to hundreds of processors would take hundreds of times that lock variable time. In order to reduce the lock variable time, of the present invention uses the shared registers at the memory for autoincrement and distribution of loop counts. Processors can also issue a read, and in the preferred embodiment of the present invention they are satisfied at the rate of one every two clock periods. Therefore, if there are 100 processors, they can all have a new loop count in 200 clock periods. This time defines the "granularity" of the system. (The term "granularity" refers to the smallest size loop on which all system processors can cooperate at once.) In an older style design, for example, because the lock time is hundreds of clock periods times hundreds of processors, the granularity may be tens of thousands of clock periods. In the system of the present invention, however, the granularity might only be a hundred or two clock periods. Those skilled in the art will readily recognize that the architecture of the present invention greatly reduces the granularity of the system and makes a wider variety of application programs parallelizable.

The reason this shared register arbitration scheme of the present invention works effectively is tied to the context switching aspect of the processors used in the present invention. While one thread is waiting for access to a shared register, the processor need simply context switch to another thread while the first thread is waiting for synchronization to occur. Because a thread can "go to sleep" while waiting for the shared register access to come back, that thread does not care that the shared registers are way out on the memory and that the reference takes a little longer to get back. This is an example of another instance that the architecture of the present invention can still work very efficiently regardless of memory latencies.

A further advantage of the shared register synchronization design of the present invention is related to the very large number of shared registers in proportion to the number of processors which are used in the present invention. The very large number of shared registers is important because although the lock time has been reduced to only two clock periods in the preferred embodiment of the present invention, if the loop count is being distributed among, for example, 1000 processors, the granularity of the system would still be a very large number of clock periods. Software techniques can take advantage of the large number of shared registers by breaking the processors into teams such that the processors get their loop counts from different registers. Those skilled in the art will appreciate the desirability of having a large number of shared registers. Having the type of functionality achieved with the shared register design of the present invention in a separate network would require a very large amount of separate hardware which would all also have to scale. Therefore, the preferred embodiment of the present invention results in a tremendous hardware savings over alternative designs simply by putting the shared registers directly on the memory banks.

Messages enter memory board 800 through one of three memory port input paths, 801a-c. These paths correspond to the processor ports A, B, and C. Because ports A and B are memory read only ports, each message entering along memory port input paths 801a and 801b consist of a memory address along with a destination tag. Because port C is a read/write port, messages entering along memory port input path 801c may be accompanied by a data word to be stored in memory. In the preferred embodiment of the present invention, each processor's three reference ports has its own separate communication path all the way to the memory banks 840 by dedicating both an inbound and an outbound crossbar network to each of the three ports, as described herein previously. Those skilled in the art will recognize that this design scheme reduces message contention and blocking to a minimum.

In the preferred embodiment of the present invention, messages entering memory board 800 are routed to the appropriate memory bank 840 using a method similar to the steering method of the 4x4 crossbar switch of the present invention described previously herein. Messages entering memory board 800 in one of the three memory input paths 801a-c first enter buffer B 804 for that path if the buffer is empty. If buffer B 804 is occupied, the message is latched into buffer A 802 for that path. Once buffer B 804 is emptied, the contents of buffer A 802 are moved to buffer B 804.

Once the first packet of a message has entered buffer B 804, buffer B 804 decodes message steering bits and steers the message to one of four group buffers 806, 808, 810, or 812 for that path which are associated with groups of four memory banks. For example, a message entering memory board 800 through input port B 804b and to be routed to memory bank group 2 would be steered to group 2 buffer 810b.

Another level of steering is accomplished next, again using the same method as is used for message movement from the entry buffers to the quadrant buffers in a 4x4 crossbar switch of the present invention as described previously herein. Messages move from the group buffers 806-812 associated with a group of four memory banks to a bank input buffer 820 associated with a single memory bank 840. At this level, messages become eligible to be selected by the bank control logic chips to access either the memory chips or the shared register.

To go from memory board 800 back to the requesting processor, the reference simply goes back out of the memory bank and through the appropriate inbound crossbar network back to the originating processor in essentially the same manner as an outbound processor-to-memory reference travels through an outbound crossbar network, as described herein previously.

Although a specific embodiment has been illustrated and described herein, it will be appreciated by those skilled in the art that any arrangement which is calculated to achieve the same purpose may be substituted for the specific embodiment shown. For example, the architecture of the present invention may be implemented with a different number of processors, different amounts of memory, or a different number of program threads per processor. In addition, those skilled in the art will recognize that, the architecture of the present invention is not dependent upon the specific type of processor used, the speed of memory, or the specific logic designs disclosed in the detailed description. For example, although the preferred embodiment was described herein as using a modified Cray 2 style processor, different types of processors could be used without departing from the scope of the present invention. For example, in an Cray Y-MP type processor, made by Cray Research, Inc., the assignee of the present invention, could be substituted for the modified Cray 2 style processor disclosed in the detailed description of the present invention. A block diagram of a Cray Y-MP processor can be found in U.S. Patent Application Serial No. 07/438,679, filed November 17, 1989, to Lee et al., entitled "VECTOR BIT MATRIX MULTIPLY FUNCTIONAL UNIT", which application is incorporated herein by reference. A Cray 1 style processor could also be substituted for the specific embodiment shown. A block diagram of a Cray 1 processor can be found in the aforementioned U.S. Patent No. 4,128,880 to Cray, Jr.

## Claims

1. A scalable parallel vector computer system having a common memory [600], a plurality of vector processors [100] for executing scalar and vector instructions and a communication means [400] for transmitting information between the common, memory and the vector processors, the system being characterised by:
the communication means having a set of n outbound crossbar networks [420] for communication from the vector processors to the common memory, and a set of n inbound crossbar networks [440] for communication from the common memory to the vector processors, wherein n is equal to the number of memory reference ports [300, 302, 304, 350, 352, 354] per processor such that the information transmitted suffers variable latencies, and
each of the plurality of processors having:
a plurality of reference ports [300, 302, 304, 350, 352, 354] for receiving or sending information from or to the communication means;
a plurality of instruction threads; and
context switching means for context switching between the plurality of instruction threads when the current instruction thread is blocked due to the unavailability of data requested from memory thereby maintaining processor activity in the light of the latencies suffered by the retrieval of information from the common memory.

2. The scalable parallel vector computer system of claim 1 wherein each processor further includes a plurality of instruction buffer sets [110a-h] and registers [120a-h, 130a-h, 140a-h] such that each instruction thread has a dedicated set of instruction buffers and registers so that switching between threads causes minimal delay.

3. The scalable parallel vector computer system of claim 1 wherein each crossbar switch (500) within the crossbar network further includes a quadrant buffer [508a-d, 510a-d, 512a-d, 514a-d] for reducing contention and blocking in the crossbar network.

4. The scalable parallel vector computer system of claim 1 wherein the common memory further includes:
a plurality of shared registers [842] for processor synchronization wherein each shared register corresponds to an individual memory bank [840]; and
a plurality of lock bits such that the context switching vector processors can reserve the memory banks.

5. A method of operating a context switching vector processor having a plurality of instruction threads each containing a plurality of scalar and vector instructions, comprising the steps of:
(a) choosing an instruction thread;
(b) executing the scalar and vector instructions in the instruction thread;
(c) sending a memory reference to common memory;
(d) encountering an instruction issue block due to the current instruction thread being blocked caused by the unavailability of data requested from common memory;
(e) context switching to the next thread;
(f) repeating steps (b), (c), (d) and (e) until all instructions are completed.

6. The method of claim 5 wherein context switching step (e) further comprises the step of checking whether the next thread has the data requested from memory available and bypassing the thread if the data requested from memory is unavailable.

## Patentansprüche

1. Skalierbares Vektor-Parallelrechnersystem mit einem gemeinsamen Speicher (600), einer Vielzahl von Vektorprozessoren (100) zur Ausführung von Skalar- und Vektoranweisungen und einem Kommunikationsmittel (400) zur Übertragung von Informationen zwischen dem gemeinsamen Speicher und den Vektorprozessoren,
dadurch gekennzeichnet,
daß das Kommunikationsmittel eine Menge von n Ausgangs-Crossbar-Netzwerken (420) zur Kommunikation von den Vektorprozessoren zu dem gemeinsamen Speicher und eine Menge von n Eingangs-Crossbar-Netzwerken (440) zur Kommunikation von dem gemeinsamen Speicher zu den Vektorprozessoren besitzt, wobei n der Anzahl der Speicherreferenzanschlüsse (300, 302, 304, 350, 352, 354) pro Prozessor entspricht, so daß die übertragenen Informationen eine variable Latenzzeit besitzen, und daß jeder der Vielzahl von Prozessoren aufweist:
eine Vielzahl von Referenzanschlüssen (300, 302, 304, 350, 352, 354) zum Empfangen und Senden von Informationen von oder zu dem Kommunikationsmittel;
eine Vielzahl von Anweisungs-Threads; und
Kontextumschaltmittel zum Umschalten des Kontextes zwischen der Vielzahl von Anweisungs-Threads, wenn der augenblickliche Anweisungs-Thread aufgrund der Nicht-Verfügbarkeit von Daten blockiert ist, die vom Speicher abgefragt wurden, die dabei die Prozessoraktivität in Anbetracht der Latenzzeiten aufrechterhalten, die durch die Abfrage von Information von dem gemeinsamen Speicher zustandekommen.

2. Skalierbares Vektor-Parallelrechnersystem nach Anspruch 1, dadurch gekennzeichnet, daß jeder Prozessor weiterhin eine Vielzahl von Anweisungspufferspeichermengen (110 a-h) und Register (120 a-h, 130 a-h, 140 a-h) enthält, so daß jeder Anweisungs-Thread eine zugewiesene Menge von Anweisungspufferspeichern und -registern besitzt, so daß das Umschalten zwischen Threads eine minimale Verzögerung verursacht.

3. Skalierbares Vektor-Parallelrechnersystem nach Anspruch 1, dadurch gekennzeichnet, daß jeder Crossbarumschalter (500) innerhalb des Crossbar-Netzwerkes weiterhin einen Quadranten-Pufferspeicher (508 a-d, 510 a-d, 512 a-d, 514 a-d) zur Reduzierung der Weiterverarbeitung und des Blockierens im Crossbar-Netzwerk enthält.

4. Skalierbares Vektor-Parallelrechnersystem nach Anspruch 1, dadurch gekennzeichnet, daß der gemeinsame Speicher weiter enthält:
eine Vielzahl von gemeinsam genutzten Registern (842) zur Prozessorsynchronisation, wobei jedes gemeinsam genutzte Register einer individuellen Speicherbank (840) entspricht; und
eine Vielzahl von Verriegelungsbits, so daß die Kontextumschalt-Vektorprozessoren die Speicherbänke reservieren können.

5. Verfahren zum Betreiben eines Kontextumschalt-Vektorprozessors mit einer Vielzahl von Instruktions-Threads, die jeweils eine Vielzahl von Skalar- und Vektorinstruktionen enthalten, mit den folgenden Verfahrensschritten:
(a) Auswählen eines Anweisungs-Threads;
(b) Ausführen der Skalar- und Vektorinstruktionen des Anweisungs-Threads;
(c) Senden einer Speicherreferenz zum gemeinsamen Speicher;
(d) Auffinden eines Instruktionseingabeblocks aufgrund des Umstandes, daß der augenblickliche Anweisungs-Thread aufgrund der Nicht-Verfügbarkeit derjenigen Daten blockiert ist, die vom gemeinsamen Speicher abgefragt sind;
(e) Kontextumschalten zum nächsten Thread;
(f) Wiederholen der Schritte (b), (c), (d) und (e) bis alle Anweisungen vollständig ausgeführt wurden.

6. Verfahren nach Anspruch 5,
dadurch gekennzeichnet, daß der Kontextumschaltschritt (e) weiterhin den Schritt des Überprüfens enthält, ob der nächste Thread die vom Speicher angefragten Daten verfügbar hat, und überbrücken des Threads, falls die vom Speicher angefragten Daten nicht verfügbar sind.

## Revendications

1. Système d'ordinateur vectoriel en parallèle,de type évolutif,ayant une mémoire commune [600], plusieurs processeurs vectoriels [100] pour exécuter des instructions vectorielles et scalaires, et des moyens de communication [400] pour transmettre l'information entre la mémoire commune et les processeurs vectoriels, le système étant caractérisé par :
les moyens de communication ayant un ensemble de n réseaux croisés de sortie [420] pour communiquer depuis les processeurs vectoriels vers la mémoire commune, et un ensemble de n réseaux croisés d'entrée [440] pour communiquer de la mémoire commune vers les processeurs vectoriels, dans lesquels n est égal au nombre de ports de référence de mémoire [300, 302, 304, 350, 352, 354] par processeur, tel que l'information transmise subisse des temps d'attente variables,
chacun des multiples processeurs ayant :
plusieurs ports de référence [300, 302, 304, 350, 352, 354] pour recevoir ou envoyer l'information du ou vers les moyens de communication ;
plusieurs tâches d'instructions ; et
un moyen de commutation pour la commutation du contexte entre plusieurs tâches d'instructions,lorsque la tâche d'instructions en cours est bloquée à cause de l'indisponibilité des données demandées à la mémoire, maintenant ainsi l'activité du processeur à la lumière des temps d'attente subis du fait de la récupération des informations de la mémoire commune.

2. Système d'ordinateur vectoriel en parallèle, de type évolutif, selon la revendication 1, dans lequel chaque processeur comprend, en plus, plusieurs ensembles de mémoires tampon d'instructions [110 a-h] et de registres [120 a-h, 130 a-h, 140 a-h], tels que chaque tâche d'instructions ait un ensemble dédié de mémoires tampon d'instructions et de registres, afin que la commutation entre les tâches provoque un minimum de retard.

3. Système d'ordinateur vectoriel en parallèle, de type évolutif, selon la revendication 1, dans lequel chaque commutateur croisé [500] dans le réseau croisé comprend en plus, une mémoire tampon en quadrature [508 a-d, 510 a-d, 512 a-d, 514 a-d] pour réduire les conflits et les blocages dans le réseau croisé.

4. Système d'ordinateur vectoriel en parallèle, de type évolutif, selon la revendication 1, dans lequel la mémoire commune comprend, en plus :
plusieurs registres partagés [842] pour la synchronisation des processeurs,dans lesquels chaque registre partagé correspond à un bloc de mémoire individuelle [840] ; et
plusieurs bits de verrouillage tels que les processeurs vectoriels commutant le contexte puissent réserver les blocs de mémoire.

5. Méthode pour mettre en outre un processeur vectoriel de commutation d'un contexte, ayant plusieurs tâches d'instructions contenant chacune plusieurs instructions vectorielles et scalaires, comprenant les étapes :
(a) de choix d'une tâche d'instructions;
(b) d'exécution des instructions vectorielles et scalaires dans la tâche d'instructions;
(c) d'envoi d'une référence mémoire à la mémoire commune;
(d) de rencontre d'un bloc de sortie d'instructions du fait du blocage de la tâche d'instructions en cours,provoqué par l'indisponibilité des données demandées à la mémoire commune;
(e) de commutation du contexte vers la nouvelle tâche;
(f) de répétition des étapes (b), (c), (d) et (e) jusqu'à ce que toutes les instructions soient exécutées.

6. Méthode selon la revendication 5, dans laquelle l'étape (e) de commutation du contexte comprend, en plus, une étape pour vérifier que les données demandées à la mémoire sont disponibles pour la tâche suivante, et éviter la tâche si les données demandées à la mémoire sont indisponibles.
